# EUROPEAN PATENT SPECIFICATION

(11) **EP 2 298 134 B1**
(45) Date of publication and mention of the grant of the patent: **23.05.2012**
(21) Application number: 10163957.3
(22) Date of filing: 26.05.2010
(51) Int. Cl.: A47C 17/04, A47C 17/70, A47G 9/08

(54) **Folding Bed Chair**
Klappbettstuhl
Fauteuil-lit pliant

(30) Priority: 22.09.2009 GB 0916612
(43) Date of publication of application: 23.03.2011
(73) Proprietor: Catchum 88 Limited, Hockley, Essex SS5 5LR (GB)
(72) Inventor: Nash, Kevin, Hockley, Essex SS5 5LR (GB)
(74) Representative: Messulam, Alec Moses

(56) References cited:
- WO-A1-2007/085174
- GB-A- 2 267 820
- GB-A- 2 409 156
- US-A- 3 918 109
- US-A1- 2008 189 855

## Description

### Field of the invention

The present invention relates to a folding bed chair for use, in particular, by anglers. GB 2 409 156 A discloses such a foldable bed chair according to the preamble of claim 1.

### Background of the invention

In certain types of fishing, notably when fishing for carp, anglers have to spend long periods of time waiting for fish to take the bait. Often, an angler may set up a folding bed chair within a bivvy and spend a whole night by the bank of a lake. For warmth, the angler may lie in a sleeping bag placed over the bed.

A folding bed chair of the type to which the present invention relates has a tubular frame supported on foldable legs, the frame being formed of mutually pivotable sections that are selectively lockable relative to one another in a compact transport configuration in which the sections lie generally parallel to one another, in a chair configuration in which the sections are inclined relative to one another and in a bed configuration in which the sections lie generally in the same plane as one another.

Folding bed chairs specifically designed for used by anglers, usually have legs of adjustable length because the ground on which they have to rest is seldom level. More significantly in the context of the present invention, instead of having just a canvas web, the bed chairs have a well padded mattress that is secured to the frame by individual springs or by a continuous elastic cord so as to offer a high degree of comfort.

The sleeping bags used by anglers are also different from those used by campers. They are much wider because they need to allow the angler to slip out of them easily and quickly when a bite is detected.

The disadvantage of all these refinements is that the equipment that the angler needs to carry to the bank is very bulky. The folded bed chair is made bulky by its padded mattress and the sleeping bag has to be carried separately because, if left on the bed chair, it would prevent the bed chair from being folded.

### Summary of the invention

With a view to mitigating the foregoing disadvantages, the present invention provides a foldable bed chair having a tubular frame supported on foldable legs, the frame being formed of mutually pivotable sections that are selectively lockable relative to one another in a compact transport configuration in which the sections lie generally parallel to one another, in a chair configuration in which the sections are inclined relative to one another and in a bed configuration in which the sections lie generally in the same plane as one another, wherein a mattress is secured to the frame and padding is permanently secured to at least the peripheral region of the mattress, characterised in that a thermally insulating cover for covering the occupant of the bedchair is secured to the mattress around its periphery by means of a releasable fastener and in that the frame is foldable into the compact transport configuration while the thermal insulating cover is secured to the mattress.

The invention may be regarded as providing a combined bed chair and sleeping bag in which the mattress of the bed chair serves as the lower half of the sleeping bag. By omitting the lower half of the sleeping bag and thereby reducing its bulk, the invention allows the bed chair to be folded with the cover still in place thereby reducing the number of items that the angler needs to carry as well as their weight.

The invention is predicated on the realisation that the padding used to improve the comfort of the mattress provides sufficient thermal insulation, making the bottom half of the sleeping bag not only unnecessary but also undesirable.

The combined thermal insulation provided by a padded mattress and the lower half of a sleeping bag can make the bed uncomfortably hot. For this reason, it is desirable on some occasions to reduce the degree of thermal insulation afforded by the mattress alone. With this in mind, in a preferred embodiment of the invention, the mattress comprises a mesh, a padded border, or cushion, framing the mesh and a padded insert releasably secured to the mesh or the border to overlie the entire area of the mesh lying within the border.

With the padded insert in place, the mattress is padded over its entire area to provide the same comfort as a conventional one-piece mattress. However, in hot weather, the preferred embodiment of the invention allows the insert to be removed in order to reduce the degree of insulation and improve air circulation, so as to keep the occupant cool.

The insulating cover may conveniently comprise two layers that are secured to one another by a releasable fastener.

The two layers preferably have different thermal insulation rating (TOG rating) so as to allow any of three levels of insulation to be selected by using one layer, the other layer or both layers. To achieve this, the releasable fastener securing the upper layer to the lower layer is also capable of securing the upper layer directly to the mattress in place of the lower layer.

### Brief description of the drawings

The invention will now be described further, by way of example, with reference to the accompanying drawings, in which:
Figure 1 is a photograph of a bed chair of the present invention with the two layers of the cover folded back, and
Figure 2 is a second photograph of the bed chair in Figure 1 showing the mattress insert folded back.

### Detailed description of the preferred embodiment

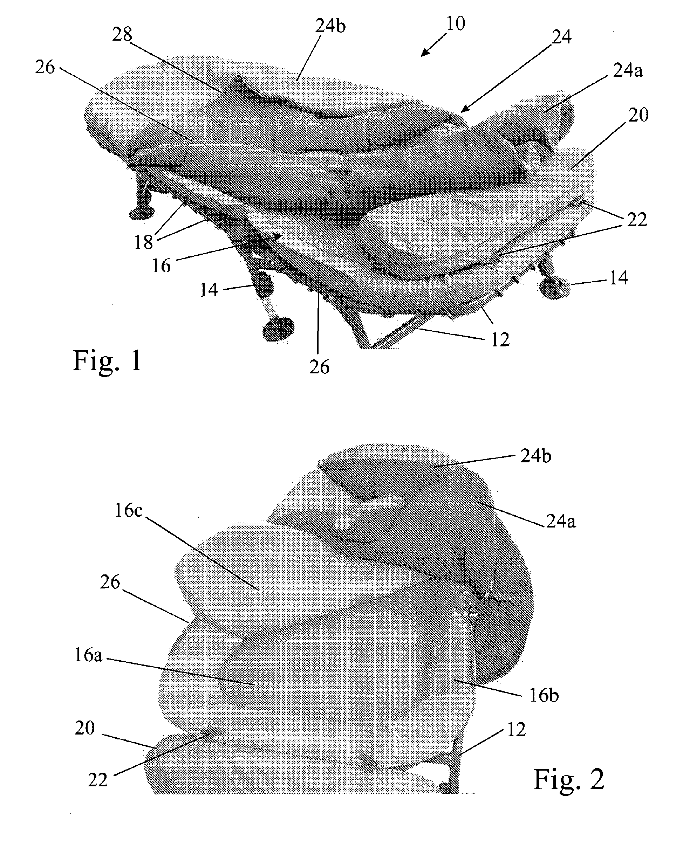

The bed chair 10 shown in the drawings has a folding frame 12 with folding legs 14 of adjustable length and a mattress 16 secured to the frame by a continuous elastic cord 18. The bed chair 10 also has a pillow 20 secured to the head of the bed by toggles 22. The frame 12 is formed of three mutually pivotable sections that are selectively lockable relative to one another. The frame can adopt a compact configuration for transportation in which the three sections lie generally parallel to one another, a bed configuration, as illustrated in Figure 1, in which the sections lie generally in the same plane as one another and a chair configuration in which the leg support section is dropped and the back support section is raised from the position shown in Figure 1. As so far described the bed chair is conventional and for this reason it is not believed necessary to describe it in greater detail.

Conventionally, the user would place a sleeping bag on top of the mattress and lie between the top and bottom halves of the sleeping bag. The lower half of the sleeping bag would therefore be disposed between the occupant and the mattress. It has been proposed to anchor the sleeping bag in some way to stop it from sliding, for example by providing pockets on the underside of the lower half of the sleeping bag that are slipped over the head and foot of the bed chair before it is folded out.

In the present invention, the occupant lies directly on the mattress 16 and a cover 24 is secured to the perimeter of the mattress 16 by a continuous releasable fastener 26. The fastener 26 could be formed of hook and look tape but a zip fastener is preferred.

The cover 24 is itself formed of two layers 24a and 24b, preferably of different TOG rating, that are secured to one another by a second zip fastener 28. The zip fasteners 26 and 28 are identical and fully separable, so that each of the two layers 24a and 24b may be separately attached to the mattress 16. In this way, the user may choose between any of three TOG ratings, depending on the prevailing weather conditions.

If the weather is very warm, the insulation afforded by the mattress 16 alone may prove excessive. To mitigate this problem, the mattress 16 as is shown in Figure 2, is made up of a mesh 16a, a padded border 16b, or cushion, framing the mesh 16a and a padded insert 16c releasable secured by releasable toggles to the mesh 16a or the border 16b to cover the entire area the mesh 16a lying within the border.

With the padded insert 16c in place, the mattress 16 is padded over its entire area to provide the same comfort as a conventional one-piece mattress. However, in hot weather, the illustrated preferred embodiment of the invention allows the insert 16c to be removed in order to reduce the degree of insulation and to improve air circulation, thereby keeping the occupant cool.

## Claims

1. A foldable bed chair (10) having a tubular frame (12) supported on foldable legs (14), the frame (12) being formed of mutually pivotable sections that are selectively lockable relative to one another in a compact transport configuration in which the sections lie generally parallel to one another, in a chair configuration in which the sections are inclined relative to one another and in a bed configuration in which the sections lie generally in the same plane as one another, wherein a mattress (16) is secured to the frame (12) and padding (16b) is permanently secured to at least the peripheral region of the mattress (16), **characterised in that** a thermally insulating cover for covering the occupant of the bedchair (24) is secured to the mattress (16) around its periphery by means of a releasable fastener (26) and **in that** the frame (16) is foldable into the compact transport configuration while the thermal insulating cover (24) is secured to the mattress (16).

2. A foldable bed chair as claimed in claim 1,
wherein the mattress (16) comprises a mesh (16a), a padded border (16b) framing the mesh (16a) and a padded insert (16c) releasably secured to the mesh (16a) or the border (16b) to overlie the area of the mesh (16a) lying within the border (16b).

3. A foldable bed chair as claimed in claim 1 or 2,
wherein the thermally insulating cover (24) comprises two layers (24a, 24b) that are secured to one another by a releasable fastener.

4. A foldable bed chair as claimed in claim 3,
wherein the two layers (24a, 24b) of the cover (24) have different thermal insulation ratings.

## Patentansprüche

1. Ein klappbarer Liegestuhl (10), mit einem Rohrrahmen (12) auf Klappbeinen (14), wobei der Rahmen (12) aus gemeinsam schwenkbaren Abschnitten geformt ist, die selektiv im Verhältnis zueinander in einer kompakten Transportkonfiguration feststellbar sind, in der die Abschnitte gewöhnlich parallel zueinander liegen, und wobei in einer Sesselkonfiguration die Abschnitte schräg zueinander stehen und in einer Liegestuhlkonfiguration alle Abschnitte gewöhnlich in derselben Ebene liegen, worin eine Matratze (16) am Rahmen (12) befestigt ist und eine Polsterung (16b) zumindest am peripheren Bereich der Matratze (16) permanent fixiert ist, **dadurch gekennzeichnet, dass** eine wärmeisolierte Decke, mit der sich der Benutzer des Liegestuhls (24) zudecken kann, mit einem lösbaren Verbindungselement (26) am gesamten Umfang der Matratze (16) befestigt ist und dass der Rahmen (16) sich in die kompakte Transportkonfiguration zusammenklappen lässt, während die wärmeisolierte (24) Decke an der Matratze (16) festgemacht ist.

2. Ein Liegestuhl, wie in Anspruch 1 beansprucht, worin die Matratze (16) Folgendes umfasst: ein Netz (16a), eine gepolsterte Umrandung (16b), die das Netz einfasst, sowie eine gepolsterte Einlage (100), die lösbar am Netz (16a) oder an der Umrandung (16b) befestigt ist, sodass sie den Bereich des Netzes (16a), der innerhalb der Umrandung (16b) liegt, überlagert.

3. Ein Liegestuhl, wie in Anspruch 1 oder 2 beansprucht, worin die wärmeisolierte Decke (24) zwei Schichten (24a, 24b) umfasst, die mithilfe eines lösbaren Verbindungselements aneinander befestigt sind.

4. Ein Liegestuhl, wie in Anspruch 3 beansprucht, worin die beiden Schichten (24a, 24b) der Decke (24) unterschiedliche Wärmeisolationswerte aufweisen.

## Revendications

1. Une fauteuil-lit pliable (10) possédant un cadre tubulaire (12) soutenu sur des pieds pliables (14), le cadre (12) étant formé de sections mutuellement pivotables qui sont sélectivement verrouillables les unes par rapport aux autres dans une configuration de transport compacte dans laquelle les sections se trouvent généralement parallèles les unes aux autres, dans une configuration de fauteuil dans laquelle les sections sont inclinées les unes par rapport aux autres et dans une configuration de lit dans laquelle les sections se trouvent généralement dans le même plan les unes que les autres, où un matelas (16) est fixé au cadre (12) et un rembourrage (16b) est fixé de manière permanente sur au moins la zone périphérique du matelas (16), **caractérisé en ce qu'**une couverture thermiquement isolante destinée à couvrir l'occupant du fauteuil-lit (24) est fixée au matelas (16) autour de sa périphérie au moyen d'un système de fixation libérable (26) et **en ce que** le cadre (16) est pliable dans la configuration de transport compacte pendant que la couverture d'isolation thermique (24) est fixée au matelas (16).

2. Un fauteuil-lit pliable selon la Revendication 1, où le matelas (16) comprend un maillage (16a), une bordure rembourrée (16b) encadrant le maillage (16a) et un insert rembourré (16c) fixé de manière libérable au maillage (16a) ou à la bordure (16b) de façon à recouvrir la zone du maillage (16a) située à l'intérieur de la bordure (16b).

3. Un fauteuil-lit pliable selon la Revendication 1 ou 2, où la couverture thermiquement isolante (24) comprend deux couches (24a, 24b) qui sont fixées l'une à l'autre par une fixation libérable.

4. Un fauteuil-lit pliable selon la Revendication 3, où les deux couches (24a, 24b) de la couverture (24) possèdent des scores d'isolation thermique différents.
